# EUROPÄISCHE PATENTSCHRIFT

(11) **EP 0 402 701 B1**
(45) Veröffentlichungstag und Bekanntmachung des Hinweises auf die Patenterteilung: **17.03.1993**
(21) Anmeldenummer: 90110218.6
(22) Anmeldetag: 30.05.1990
(51) Int. Cl.: C03C 25/02

(54) **Verfahren und Vorrichtung zur Herstellung eines Lichtwellenleiters**
Process and apparatus for making of a light waveguide
Procédé et appareil de fabrication d'un guide d'ondes optique

(30) Priorität: 10.06.1989 DE 3919067
(43) Veröffentlichungstag der Anmeldung: 19.12.1990
(73) Patentinhaber: kabelmetal electro GmbH, 30002 Hannover (DE)
(72) Erfinder: Lautenbach, Wolfgang, D-7252 Weil der Stadt (DE)

(56) Entgegenhaltungen:
- EP-A- 0 198 561
- GB-A- 2 044 751

## Beschreibung

Die vorliegende Erfindung bezieht sich auf ein Verfahren zur Herstellung eines Lichtwellenleiters sowie auf eine Vorrichtung zur Ausübung des Verfahrens.

Die Beschichtung der Glasfaser von Lichtwellenleitern erfolgt so, daß die Glasfaser, unter Einhaltung eines Toleranzbereiches, zentrisch zur Beschichtung verläuft. Um dies zu gewährleisten, muß die Glasfaser zentrisch durch die Beschichtungsdüse hindurchgezogen werden. Dies erfordert eine sehr genaue, zeitraubende Justierung der Anlagenteile eines Faserziehturms. Trotzdem kann durch Veränderung der Lage von Anlagenteilen, z.B. durch Temperaturänderungen, die Exzentrizität der Glasfaser die Toleranzgrenze überschreiten, was zu einer erneuten zeitraubenden Nachjustierung zwingt.

Um die Zentrizität der Glasfaser bezüglich der Beschichtung in einfacher Weise einstellen und nachstellen zu können, ist es aus der EP-B 0 178 107 bekannt, die gesamte Beschichtungsvorrichtung an oder in der Nähe der Austrittsöffnung der Beschichtungsdüse um zwei zueinander senkrecht stehende Achsen kippbar anzuordnen. Die Einstellung oder Nachstellung erfolgt so, daß die Zentrizität der aus der Beschichtungsdüse austretenden beschichteten Glasfaser gemessen wird und die Vorrichtung entsprechend einer vorhandenen Exzentrizität so geschwenkt wird, daß die Exzentrizität verringert wird. Die notwendigen Stellgrößen werden dadurch erzeugt, daß zwei um 90° versetzte Laserstrahlen auf die austretende beschichtete Glasfaser gerichtet werden und die auftretenden Streumuster auf durchleuchtbaren Scheiben abgebildet werden. Die Streumuster werden elektronisch ausgewertet und aus vorhandenen Unsymmetrien die notwendigen Stellgrößen erzeugt und Stellmotoren zur Verstellung der Vorrichtung zugeführt.

Der vorliegenden Erfindung liegt ebenfalls die Aufgabe zugrunde, ein Verfahren und eine Vorrichtung anzugeben, mit dem bzw. der eine Justierung oder Nachjustierung der Zentrizität der Glasfaser in einfacher Weise und ohne großen Zeitaufwand möglich ist.

Gelöst wird diese Aufgabe durch die im Anspruch 1 angegebenen Verfahrensmerkmale bzw. die im Anspruch 6 angegebenen Vorrichtungsmerkmale. Hierdurch ist es möglich, z.B. bei leichtem Versatz der Faserziehrichtung und/oder Änderung der Lage der Beschichtungsvorrichtung etc., die Glasfaser so auszurichten, daß sie die Beschichtungsdüse zentrisch beschichtet verläßt. Überraschenderweise konnte außerdem festgestellt werden, daß bei Anwendung der Zentrierdüse etwa an der Glasfaser anhaftende Blasen abgestreift werden.

Weitere vorteilhafte Einzelheiten der Erfindung sind in den Unteransprüchen angegeben und nachfolgend anhand eines in der Zeichnung veranschaulichten Ausführungsbeispiels beschrieben. Es zeigen:
Fig. 1 eine schematische Darstellung einer Beschichtungsvorrichtung von der Seite im Schnitt bei exzentrischem Verlauf der Glasfaser,
Fig. 2 eine gleiche schematische Darstellung wie in Fig. 1, jedoch mit einer Zentrierdüse und zentrischem Verlauf der Glasfaser,
Fig. 3 mögliche Bereiche, innerhalb der die Mündung der Zentrierdüse verstellbar ist,
Fig. 4 eine Beschichtungsvorrichtung mit einstellbarer Zentrierdüse von der Seite gemäß dem Schnitt B-B der Fig. 5,
Fig. 5 die Beschichtungsvorrichtung gemäß dem Schnitt A-A der Fig. 4 und
Fig. 6 eine schematische Darstellung einer Meß- und Steueranordnung zur Regelung der zentralen Lage der Glasfaser bezüglich der Beschichtung.

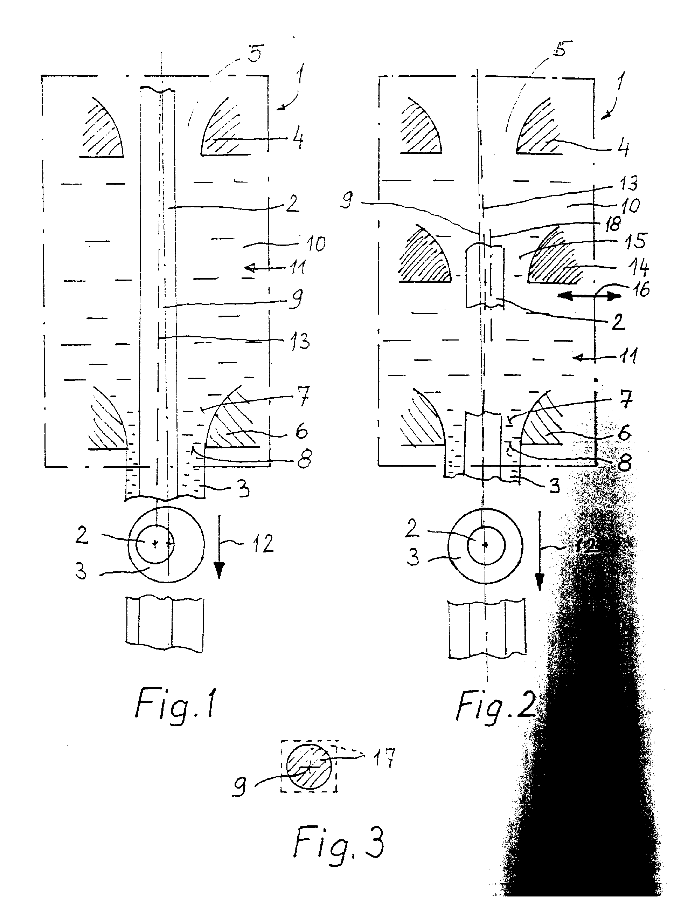

In Fig. 1 ist mit 1 eine Vorrichtung zum Aufbringen einer Schicht 3 aus Lack oder Kunststoff auf einer Glasfaser 2 bezeichnet. Diese besitzt eine obere Sperrdüse 4 mit einem Düsentrichter 5 und eine untere Beschichtungsdüse 6 mit einem Düsentrichter 7, der in die Düsenmündung 8 übergeht.

Sperrdüse 4 und Beschichtungsdüse 6 sind so zueinander zentriert, daß ihre Düsenachsen auf der gedachten Zentralachse 9 liegen.

Zwischen der Sperrdüse 4 und der Beschichtungsdüse 6 ist eine Kammer 10 gebildet, die von außen her mit vorgegebenem Druck von z.B. 1 bis 2 bar mit einem flüssigen bis pasteusen, härtbaren oder selbsthärtenden Beschichtungsmaterial 11 geflutet ist.

Durch die Beschichtungsvorrichtung 1 wird die Glasfaser 2 in Faser-Ziehrichtung 12 von oben nach unten so hindurchgezogen, daß sie die Sperrdüse 4 und die Beschichtungsdüse 6 nicht berührt und insbesondere so, daß die Mittellinie 13 der Glasfaser 2 möglichst mit der Zentralachse 9 zusammenfällt. Eine derartig genaue Einstellung ist jedoch nicht möglich, zumal z.B. durch Temperaturänderungen hervorgerufene Spannungen an einzelnen Anlagenteilen eines Faserziehturmes immer wieder zu Lageveränderungen führen. In der Fig. 1 ist eine unerwünschte Lageveränderung der Glasfaser 2 bezüglich der Zentralachse 9 dargestellt. Wie ersichtlich, wird die Glasfaser 2 dann nicht mehr zentrisch durch die Beschichtungsdüse 6 und die Düsenmündung 8 hindurchgezogen und die Glasfaser 2 wird entsprechend beim Verlassen der Beschichtungsdüse 6 so vom Beschichtungsmaterial 11 umgeben, daß sie exzentrisch zu der gebildeten Beschichtung 3 verläuft.

Gemäß der Erfindung kann die Exzentrizität beseitigt oder auf eine zulässige Toleranzgrenze vermindert werden, indem gemäß Fig. 2 in der Kammer 10 eine Zentrierdüse 14 mit dem Düsentrichter 15 vorgesehen wird, die in einer senkrecht zur Zentralachse 9 verlaufenden, durch den Pfeil 16 angedeuteten Ebene verschiebbar und auf einen beliebigen Punkt innerhalb eines in Fig 3 dargestellten schraffierten bzw. gestrichelt angedeuteten Bereiches 17 um die Zentralachse 9 einstellbar bzw. justierbar ist.

Bei einer in Fig 1 dargestellten Abweichung der Mittellinie 13 der Glasfaser 2 von der Zentralachse 9 wird nun, wie in Fig. 2 gezeigt, die Zentrierdüse 14 so weit, in diesem Fall nach rechts, verschoben, daß die Glasfaser 2 zentrisch aus der Düsenmündung 8 der Beschichtungsdüse 6 austritt. Dadurch wird eine zentrische Beschichtung der Glasfaser 2 erreicht. Die Mittellinie 18 der Zentrierdüse 14 ist dabei gegen die Zentralachse 9 z.B. so weit nach rechts versetzt, daß die Glasfaser 2 so weit nach rechts abgelenkt wird, daß auch deren Mittellinie 13 im Bereich der Zentrierdüse 14 rechts von der Zentralachse 9 verläuft und dann genau zentrisch zur Düsenmündung 8 gezogen wird.

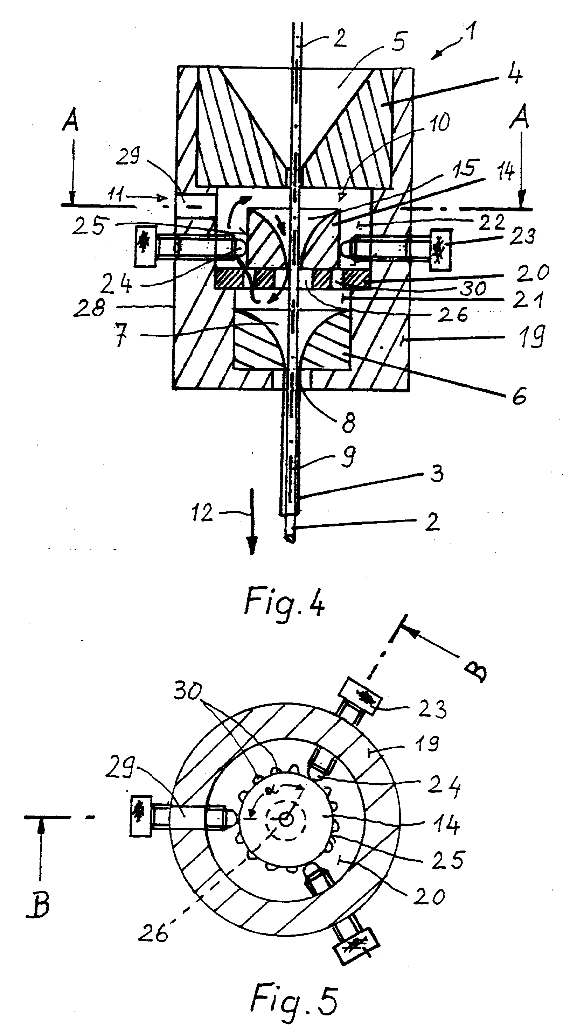

Die Fig. 4 zeigt einen möglichen Aufbau einer Vorrichtung 1 mit einer Zentrierdüse 14. Diese besteht aus einem Gehäuse 19, das oben mit der Sperrdüse 4 und unten mit der Beschichtungsdüse 6 bis auf die entsprechenden Düsenöffnungen geschlossen ist. Zwischen der Sperrdüse 4 und der Beschichtungsdüse 6 ist eine Kammer 10 gebildet, die durch eine senkrecht zur Zentralachse 9 angeordnete gelochte Platte 20 in einen unteren Kammerabschnitt 21 und einen oberen Kammerabschnitt 22 unterteilt ist.

Auf der Platte 20 ist die Zentrierdüse 14 verschiebbar gelagert. Diese kann durch mehrere z.B. als Justierschrauben ausgebildete Einstellmittel 23 in einem in Fig 3 dargestellten Bereich 17 verschoben und justiert werden. Vorzugsweise sind wenigstens drei Einstellmittel 23 um einen gleichen Winkel α gegeneinander versetzt angeordnet. Diese sind im Gehäuse 19 radial zur Zentralachse 9 verstellbar angeordnet und von außen betätigbar (Fig. 5), wobei ihre Stellköpfe 24 am Umfang 25 der Zentrierdüse 14 anliegen.

Unterhalb der Zentrierdüse 14 ist die Platte 20 mit einer Durchbrechung 26 versehen, die sich mindestens über denjenigen Flächenbereich erstreckt, über den die Düsenmündung 27 der Zentrierdüse 14 verschiebbar ist.

In der Seitenwand 28 des Gehäuses 19 ist eine in den oberen Kammerabschnitt 22 mündende Öffnung 29 vorgesehen, durch die das Beschichtungsmaterial 11 unter vorbestimmtem Druck in den Kammerabschnitt 22 eingeleitet werden kann.

In der Platte 20 sind weiterhin Öffnungen 30 vorgesehen, durch die der untere und obere Kammerabschnitt 21 und 22 miteinander verbunden sind, so daß beide mit Beschichtungsmaterial 11 versorgt werden können.

Vorzugsweise ist die Zentrierdüse 14 derart ausgebildet, z.B. der Mündungsdurchmesser so groß, daß beim Durchziehen der Glasfaser 2 mehr Beschichtungsmaterial 11 durch die Zentrierdüse 14 hindurchgeschleppt wird, als durch die Beschichtungsdüse 6 austritt. Es tritt dann eine für die Beschichtung günstige Zirkulation des Beschichtungsmaterials 11 vom oberen Kammerabschnitt 22 durch die Zentrierdüse 14 in den unteren Kammerabschnitt 21 und durch die Öffnungen 30 wieder zum oberen Kammerabschnitt 22 auf, wie durch die Pfeile in Fig. 4 angedeutet ist.

Gemäß einer vorteilhaften Ausgestaltung der Erfindung können die Öffnungen 30 und die Zentrierdüse 14 derart angeordnet und deren Abmessungen derart ausgebildet werden, daß beim Verschieben der Zentrierdüse 14 die Öffnungen 30 derart teilweise oder ganz verschlossen oder abgedeckt bzw. geöffnet oder vergrößert werden, daß eine verminderte oder erhöhte Zirkulation des Beschichtungsmaterials 11 auftritt, die zur zusätzlichen Verschiebung der Glasfaser 2 und damit zur Zentrierung derselben führt. Beispielsweise sind die als runde Löcher ausgebildeten Öffnungen 30 auf einem zur Zentralachse 9 konzentrischen Kreis angeordnet und die Zentrierdüse 14 ist außen an der Auflagefläche ebenfalls kreisförmig ausgebildet und bedeckt in konzentrischer Lage alle Öffnungen 30 teilweise (vgl. Fig. 5). Erforderlichenfalls können die Öffnungen 30 auch als Schlitze, z B. radial verlaufend, oder als Dreieck etc. ausgebildet sein.

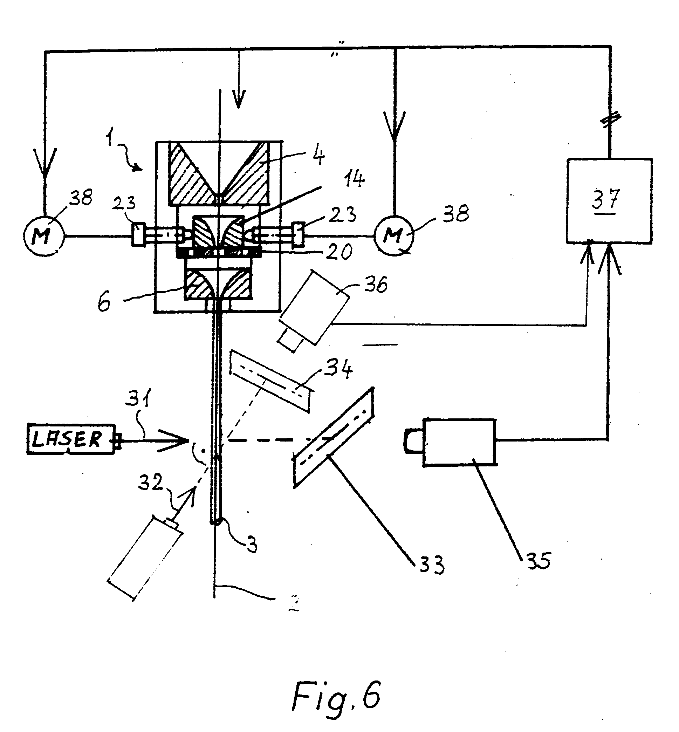

Eine zweckmäßige Weiterbildung der Erfindung besteht darin, daß die Zentrizität der aus der Beschichtungsdüse 6 austretenden beschichteten Glasfaser 2 bezüglich ihrer Beschichtung 3 gemessen wird und die Meßdaten einer Auswerteelektronik eingegeben werden. Die Auswerteelektronik erzeugt aus den Meßdaten Steuersignale, die Stellgliedern zur Verstellung der Zentrierdüse 14 zugeleitet werden. Über die Stellglieder ist die Zentrierdüse 14 derart verstellbar, daß eine vorhandene Exzentrizität der Glasfaser 2 bezüglich der Beschichtung 3 verringert oder ganz beseitigt wird. Ein solches Meß- und Regelverfahren ist nachfolgend anhand der in Fig. 6 gezeigten Anordnung beschrieben:
Die aus der Beschichtungsdüse 6 austretende beschichtete Glasfaser 2 wird mit zwei Laserstrahlen 31 und 32 aus zueinander orthogonalen Richtungen radial bestrahlt Dadurch entstehen auf der der Einstrahlseite abgewandten Seite der beschichteten Glasfaser 2 je ein Streu- und Beugungsbild, das auf je eine Mattscheibe 33 bzw. 34 projiziert wird Der durchgehende Laserstrahl erzeugt einen gegenüber den übrigen Streu- und Beugungslinien helleren Leuchtfleck, demgegenüber die Streu- und Beugungslinien je nach Exzentrizität der Glasfaser 2 zur Beschichtung 3 verschoben sind. Bei zentrischer Lage liegt das Streu- und Beugungsbild symmetrisch zu diesem Leuchtfleck. Letzterer kann daher als Referenz zur Beurteilung der Exzentrizität herangezogen werden.

Das auf den Mattscheiben 33 und 34 erscheinende Streu- und Beugungsbild wird von je einer CCD-Kamera 35 bzw. 36 abgetastet und aufgezeichnet und die daraus abgeleiteten elektrischen Werte einer Auswerteelektronik 37 eingegeben. Diese bildet unter Verwendung des hellen Leuchtflecks als Referenz für die Symmetrie des Streu- und Beugungsbildes bei vorhandener Unsymmetrie entsprechende Steuersignale, die an die entsprechenden, je einem Einstellmittel 23 zugeordnete Stellglieder 38, z.B. Schrittmotoren, ausgegeben werden. Durch die Steuersignale werden die Stellglieder 38 so angesteuert, daß die Zentrierdüse 14 über die Einstellmittel 23 derart verstellt wird, daß eine vorhandene Exzentrizität der Glasfaser 2 zur Beschichtung 3 vermindert oder ausgeregelt wird.

## Patentansprüche

1. Verfahren zur Herstellung eines Lichtwellenleiters aus einer Glasfaser durch Aufbringen einer Lack- oder Kunststoffschicht, indem die Glasfaser durch eine obere Sperrdüse und eine untere Beschichtungsdüse einer mit einem flüssigen oder pasteusen, härtbaren oder erhärtenden Beschichtungsmaterial gefluteten Kammer von oben nach unten berührungsfrei hindurchgezogen wird, **dadurch gekennzeichnet,** daß die Glasfaser (2) in der Kammer (10) berührungsfrei durch eine vom Beschichtungsmaterial (11) überflutete, in einer zur Faser-Ziehrichtung (12) senkrechten Ebene verschiebbare und justierbare Zentrierdüse (14) gezogen wird und daß die Zentrierdüse (14) derart verstellbar ist, daß die aus der Beschichtungsdüse (6) austretende Glasfaser (2) zentrisch zur Beschichtung (3) verläuft.

2. Verfahren nach Anspruch 1, dadurch gekennzeichnet, daß die Zentrizität der aus der Beschichtungsdüse (14) ausgetretenen beschichteten Glasfaser (2) gemessen wird, die erhaltenen Meßdaten einer Auswerteelektronik (37) eingegeben werden, welche aus den Meßdaten Steuersignale erzeugt und an Stellglieder (38) zum Verstellen der Zentrierdüse (14) ausgibt und dadurch eine vorhandene Exzentrizität der Glasfaser (2) bezüglich der Beschichtung (3) ausgeregelt wird

3. Verfahren nach Anspruch 2, dadurch gekennzeichnet, daß die beschichtete Glasfaser (2) mit zwei Laserstrahlen (31, 32) aus zwei orthogonalen Richtungen radial bestrahlt wird, daß das jeweils erzeugte Streu- und Beugungsbild auf je eine Mattscheibe (33, 34) projiziert und dieses von je einer CCD-Kamera (35 bzw. 36) aufgenommen wird und die von der CCD-Kamera (35 bzw. 36) erzeugten, dem Streu- und Beugungsbild entsprechenden Signale an die Auswerteelektronik (37) weitergeleitet werden, wobei jeweils der vom durchgehenden Laserstrahl (31, 32) erzeugte hellere Leuchtfleck als Referenz für die Symmetrie des zugehörigen Streu- und Beugungsbildes verwendet wird und aus vorhandenen Unsymmetrien die Exzentrizität der Glasfaser (2) ermittelt und durch entsprechende Steuersignale Stellglieder (38) angesteuert und über diese die Zentrierdüse (14) so verstellt wird, daß die Exzentrizität der Glasfaser (2) bezüglich der Beschichtung (3) ausgeregelt wird.

4. Verfahren nach einem der Ansprüche 1 bis 3, dadurch gekennzeichnet, daß die Kammer (10) durch eine gelochte Platte (20) in einen oberen und einen unteren Kammerabschnitt (22 und 21) unterteilt wird, daß die Zentrierdüse (14) auf der Platte (20) verschoben werden kann und daß die Zentrierdüse (14) derart gewählt wird, daß beim Hindurchziehen der Glasfaser (2) durch die Zentrierdüse (14) mehr Beschichtungsmaterial vom oberen (22) Kammerabschnitt zum unteren (21) mitgenommen wird als aus der Beschichtungsdüse (6) austritt und das Beschichtungsmaterial (11) durch Öffnungen (30) die Platte (20) vom unteren (21) zum oberen (22) Kammerabschnitt zirkuliert.

5. Verfahren nach Anspruch 4, dadurch gekennzeichnet, daß die zur Zirkulation des Beschichtungsmaterials vorgesehenen Öffnungen (30) und die Zentrierdüse (14) derart angeordnet und ausgebildet werden, daß bei der Verschiebung der Zentrierdüse (14) die Öffnungen (30) derart verschlossen bzw. geöffnet werden, daß die dadurch erhöhte oder verminderte Zirkulation des Beschichtungsmaterials (11) eine zusätzliche Zentrierung der Glasfaser (2) bewirkt.

6. Vorrichtung zur Herstellung eines Lichtwellenleiters nach dem Verfahren nach einem der Ansprüche 1 bis 5, dadurch gekennzeichnet, daß innerhalb der Kammer (10) eine Zentrierdüse (14) in einer senkrecht zur Faser-Ziehrichtung senkrechten Ebene verschiebbar angeordnet ist, und daß Einstellmittel (23) vorgesehen sind, mit denen die Zentrierdüse (14) derart verstellbar ist, daß die Mittellinie (18) der Zentrierdüse (14) auf einen beliebigen Punkt innerhalb eines begrenzten Bereiches (17) um die durch die Sperrdüse (4) und die Beschichtungsdüse (6) vorgegebene Zentralachse (9) einstellbar ist.

7. Vorrichtung nach Anspruch 6, dadurch gekennzeichnet, daß in der Kammer (10) in der senkrecht zur Zentralachse (9) verlaufenden Ebene eine Platte (20) vorgesehen ist, auf der die Zentrierdüse (14) verschiebbar gelagert ist und daß die Platte (20) unterhalb der Zentrierdüse (14) eine Durchbrechung (26) aufweist, die sich mindestens über denjenigen Flächenbereich erstreckt, über den die Düsenmündung (27) der Zentrierdüse (14) verschiebbar ist.

8. Vorrichtung nach Anspruch 7, dadurch gekennzeichnet, daß die Platte (20) die Kammer (10) in einen oberen (22) und einen unteren (21) Kammerabschnitt unterteilt, und daß die Platte (20) Öffnungen (30) besitzt, über die die beiden Kammerabschnitte (21, 22) miteinander verbunden sind.

9. Vorrichtung nach einem der Ansprüche 6 bis 8, dadurch gekennzeichnet, daß die Einstellmittel (23) aus wenigstens drei radial verstellbaren und im gleichen Winkel (α) voneinander beabstandeten Justierschrauben bestehen, deren in die Kammer (10 bzw. 22) ragende Stellköpfe (24) am Umfang (25) der Zentrierdüse (14) anliegen.

10. Vorrichtung nach einem der Ansprüche 6 bis 9, dadurch gekennzeichnet, daß jedes Einstellmittel (23) mit je einem Stellglied (38) gekuppelt ist und die Stellglieder (38) entsprechend einer gemessenen Exzentrizität der Glasfaser (2) bezüglich der Beschichtung (3) über eine Auswerteelektronik (37) so ansteuerbar sind und dadurch die Zentrierdüse (14) so einstellbar ist, daß die Exzentrizität vermindert bzw. beseitigt wird.

## Claims

1. Method for producing an optical fibre from a glass fibre by applying a varnish or plastic layer, in that the glass fibre is drawn without contact from top to bottom through an upper blocking nozzle and a lower coating nozzle of a chamber which is flooded with a coating material which is liquid or in the form of paste, and can be cured or is curing, characterised in that the glass fibre (2) in the chamber (10) is drawn without contact through a centring nozzle (14) over which the coating material (11) floods and which can be displaced and adjusted in a plane at right angles to the fibre drawing direction (12), and in that the centring nozzle (14) is adjustable in such a manner that the glass fibre (2) emerging from the coating nozzle (6) runs centrally with respect to the coating (3).

2. Method according to Claim 1, characterised in that the centricity of the coated glass fibre (2) which has emerged from the coating nozzle (14) is measured, the measurement data obtained are passed to evaluation electronics (37) which produce control signals from the measurement data and emits the said signals to actuating elements (38) for adjusting the centring nozzle (14), and in this way regulates out existing eccentricity of the glass fibre (2) with respect to the coating (3).

3. Method according to Claim 2, characterised in that the coated glass fibre (2) is irradiated radially from two orthogonal directions by two laser beams (31, 32), in that the respectively generated scatter image and diffraction image are projected onto in each case one ground-glass plate (33, 34) and said images are recorded by in each case one CCD camera (35 or 36 respectively), and the signals corresponding to the scatter image and diffraction image and produced by the CCD cameras (35 and 36 respectively) are passed to the evaluation electronics (37), the brighter light spot generated by the continuous laser beam (31, 32) in each case being used as a reference for the symmetry of the associated scatter image and diffraction image, and the eccentricity of the glass fibre (2) being determined from the existing asymmetries, and actuating elements (38) being driven by means of corresponding control signals, and said signals adjusting the centring nozzle (14) such that the eccentricity of the glass fibre (2) with respect to the coating (3) is regulated out.

4. Method according to one of Claims 1 to 3, characterised in that the chamber (10) is divided by a perforated plate (20) into an upper and a lower chamber section (22 and 21), in that the centring nozzle (14) can be displaced on the plate (20), and in that the centring nozzle (14) is selected in such a manner that, when the glass fibre (2) is drawn through the centring nozzle (14), more coating material is taken with it from the upper (22) chamber section to the lower (21) than emerges from the coating nozzle (6), and the coating material (11) circulates through openings (30) in the plate (20) from the lower (21) to the upper (22) chamber section.

5. Method according to Claim 4, characterised in that the openings (30), which are provided for circulation of the coating material, and the centring nozzle (14) are arranged and constructed in such a manner that, during the displacement of the centring nozzle (14), the openings (30) are closed or opened respectively in such a manner that the consequentially increased or reduced circulation of the coating material (11) results in additional centring of the glass fibre (2).

6. Device for producing an optical fibre according to the method of one of Claims 1 to 5, characterised in that a centring nozzle (14) is arranged inside the chamber (10) such that it can be displaced in a vertical plane at right angles to the fibre drawing direction, and in that adjusting means (23) are provided by means of which the centring nozzle (14) can be adjusted in such a manner that the centre line (18) of the centring nozzle (14) is adjustable to any desired point inside a limited region (17) about the central axis (9) which is predetermined by the blocking nozzle (4) and the coating nozzle (6).

7. Device according to Claim 6, characterised in that a plate (20) is provided in the chamber (10) in the plane which runs at right angles to the central axis (9), on which plate (20) the centring nozzle (14) is supported such that it can be displaced, and in that the plate (20) has a perforation (26) underneath the centring nozzle (14), which perforation (26) extends at least over that surface region over which the nozzle opening (27) of the centring nozzle (14) can be displaced.

8. Device according to Claim 7, characterised in that the plate (20) divides the chamber (10) into an upper (22) and a lower (21) chamber section, and in that the plate (20) has openings (30) via which the two chamber sections (21, 22) are connected to one another.

9. Device according to one of Claims 6 to 8, characterised in that the adjusting means (23) consist of at least three adjusting screws, which can be adjusted radially and are spaced apart from one another at the same angle (α), and whose adjusting heads (24) which project into the chambers (10 and 22 respectively) rest on the circumference (25) of the centring nozzle (14).

10. Device according to one of Claims 6 to 9, characterised in that each adjusting means (23) is coupled to in each case one actuating element (38), and the actuating elements (38) can be driven corresponding to a measured eccentricity of the glass fibre (2) with respect to the coating (3) via evaluation electronics (37) and, in consequence, the centring nozzle (14) can be adjusted such that the eccentricity is reduced or eliminated.

## Revendications

1. Procédé de fabrication d'un conducteur d'ondes lumineuses avec une fibre de verre sur laquelle on dépose une couche de plastique ou de laque, dans lequel la fibre de verre est tirée du haut en bas sans contact à travers la buse supérieure d'obturation et la buse inférieure de revêtement d'une chambre dans laquelle s'écoule un matériau de revêtement fluide ou pâteux, durcissable ou durcissant,
caractérisé en ce que la fibre de verre (2) est tirée dans la chambre (10) sans contact à travers une buse de centrage (14) noyée dans le matériau de revêtement, ajustable et déplaçable dans un plan perpendiculaire à la direction de tirage de la fibre (12), et en ce que la buse de centrage (14) est positionnée de façon à ce que la fibre de verre (2) sortant de la buse de revêtement (6) défile au centre du revêtement (3).

2. Procédé selon la revendication 1, caractérisé en ce que l'excentricité de la fibre de verre (2) sortant revêtue de la buse de revêtement (14) est mesurée, les valeurs de mesure obtenues étant appliquées à une électronique d'évaluation (37) qui génère à partir des valeurs de mesure des signaux de commande et les applique à un élément de réglage (38) pour positionner la buse de centrage (14) réglant ainsi l'excentricité de la fibre de verre (2) par rapport au revêtement (3) à une valeur donnée.

3. Procédé selon la revendication 2, caractérisé en ce que la fibre de verre (2) revêtue est exposée à deux rayons laser (31, 32) dans deux directions radiales orthogonales en ce que l'image de diffusion et celle de diffraction obtenues sont projetées chacune sur un verre dépoli (33, 34), lesdites images étant enregistrées chacune par une caméra CCD (35, 36) et les signaux générés par les caméras CCD (35, 36) correspondant aux images de diffusion et de diffraction étant transmis à l'électronique d'évalutation (37), pour laquelle à chaque fois la tache lumineuse la plus claire générée par le rayon laser (31, 32) traversant est utilisée comme référence pour la symétrie de l'image de diffusion et de diffraction correspondante et qui pour une dissymétrie donnée détecte l'excentricité de la fibre de verre (2) et commande l'élément de réglage de centrage (14) de telle sorte que l'excentricité de la fibre de verre (2) par rapport au revêtement (3) est réglée.

4. Procédé selon l'une des revendications 1 à 3, caractérisé en ce que la chambre (10) est séparée par une plaque trouée (20) en une partie supérieure et une partie inférieure (22 et 21) en ce que la buse de centrage (14) peut être déplaçable sur la plaque (20) et en ce que la buse de centrage (14) est choisie telle que lors du tirage de la fibre de verre à travers la buse de centrage il y ait plus de matériau de revêtement entraîné de la partie supérieure (22) à la partie inférieure (21) qu'il n'en sort de la buse de revêtement (6) et que le matériau de revêtement (11) circule à travers les ouvertures (30) de la plaque (20) de la partie inférieure (21) vers la partie supérieure (22).

5. Procédé selon la revendication 4, caractérisé en ce que les ouvertures (30) prévues pour la circulation du matériau de revêtement et la buse de centrage (14) sont conçues et disposées de telle sorte que par le déplacement de la buse de centrage (14) les ouvertures (30) soient fermées ou ouvertes et que la circulation de matériau de revêtement (11) ainsi augmentée ou diminuée procure un centrage supplémentaire de la fibre de verre (2).

6. Dispositif pour la fabrication d'un conducteur d'ondes lumineuses selon le procédé d'une des revendications 1 à 5, caractérisé en ce qu'à l'intérieur de la chambre (10) est disposée une buse de centrage (14) déplaçable dans un plan orthogonal à la direction de tirage de la fibre et en ce que des moyens de réglage (23) sont prévus grâce auxquels la buse de centrage (14) est positionnée de façon que la ligne moyenne (18) de la buse de centrage (14) soit réglable en un point choisi à l'intérieur d'un domaine limité (17) autour de l'axe central (9) constitué par la buse d'obturation (4) et la buse de revêtement (6).

7. Dispositif selon la revendication 6, caractérisé en ce que dans la chambre (10) il est prévu une plaque (20) dans le plan perpendiculaire à l'axe central sur laquelle la buse de centrage (14) est montée mobile et en ce que la plaque (20) présente sous la buse de centrage (14) une découpe (26) qui s'étend au moins sur le domaine plan dans lequel l'ouverture (27) de la buse de centrage (14) est déplaçable.

8. Dispositif selon la revendication 7, caractérisé en ce que la plaque (20) divise la chambre (10) en une partie supérieure (22) et une partie inférieure (21) et en ce que la plaque (20) comporte des ouvertures (30) qui réunissent les deux parties (21, 22) ensemble.

9. Dispositif selon l'une des revendications 6 à 8, caractérisé en ce que les moyens de réglage (23) sont constitués d'au moins trois vis d'ajustage réglables radialement et écartées l'une de l'autre d'un même angle (α), dont les têtes de réglage (24) s'élevant dans la chambre (10 resp. 22) s'appliquent sur le pourtour (25) de la buse de centrage (14).

10. Dispositif selon l'une des revendications 6 à 9, caractérisé en ce que chaque moyen de réglage (23) est couplé avec un élément de réglage (38), et les éléments de réglage (38) correspondant à une excentricité précise de la fibre de verre (2) par rapport au revêtement (3) sont commandables par une électronique d'évaluation (37) de façon que la buse de centrage (14) soit réglable de telle sorte que l'excentricité soit diminuée ou supprimée.
